# EUROPEAN PATENT APPLICATION

(11) **EP 1 467 544 A1**
(43) Date of publication of application: **13.10.2004**
(21) Application number: 04101446.5
(22) Date of filing: 07.04.2004
(51) Int. Cl.: H04M 3/42, H04M 3/38, H04Q 3/00, H04M 3/22

(54) **Method and apparatus for installing telephone subscriptions**

(30) Priority: 10.04.2003 SE 0301081
(71) Applicant: Holmstedt, Börje, 125 34 Älvsjö (SE)
(72) Inventor: Holmstedt, Börje, 125 34 Älvsjö (SE)
(74) Representative: Herbjörnsen, Rut

(57) **Abstract**

A method and an apparatus for installing telephone subscriptions in a telecommunications network with wiring paths between a telephone station and telephone terminal sockets, wherein said telephone terminal sockets are set into a limited access state in relation to the telecommunications network, wherein said wiring paths are pre-connected to a predetermined connection and are associated with predetermined wiring identities; a telephone subscription is installed in response to a call from a said telephone terminal socket and inputting of an in advance assigned telephone number and an in advance assigned code; and the telephone station detects the associated wiring identity for the wiring path through which said call is made and the telephone subscription is registered with the telephone number that the subscriber has been assigned in advance as a new wiring identity.

## Description

### Technical Field

The present invention relates in general to installing telephone subscriptions in stationary telecommunications networks. More specifically the present invention relates to a method and an apparatus for installing a telephone subscription in a telecommunications network with wiring paths between a telephone station and telephone terminal sockets where said terminal sockets are set into a limited access state in relation to the telecommunications network.

### Background

In connection with establishing new telephone subscriptions or moving a telephone subscription to a different address the telephone operators, with the present state of the art, in the first place seek to use pre-connected wiring paths, and to apply delivery of what is called "Immediate telephone". This is based on the fact that most of the new or moving subscribers will use their subscription in a place where there has been a telephone subscription before. Pre-connected wiring paths are registered with the telephone number of the previous subscriber, possibly in combination with an identity of the premises such as apartment number or estate number. With the aid of such information about the subscriber details of a previous subscriber the operators use the same wiring (i.e. the pre-connected wiring path) as in the previous subscription when connecting a new subscriber. Today this is generally successful in about 50 % of the cases of connecting, and regionally "Immediate telephone"-connections can be achieved to a somewhat larger extent.

In those cases when existing wiring cannot be used successfully an installation engineer has to manually couple the wiring for the subscription, which is time as well as cost consuming. In new installations and other kinds of subscriptions where there is no wiring and no existing sockets manual installation work has to be done in any case.

### Prior Art

In addition to the mentioned prior art there are other examples of prior art in the following patent publications.

The publication WO 96/25003 discloses a method and apparatus for remotely activating and gaining access to telephone services in a telephone network.

The publication WO 01/37584 discloses a system and a method for providing remote access to telephone services associated with a home telephony device.

Installing telephone subscriptions is, in short, to a fairly high degree still a manual work due to the fact that there are no efficient technical solutions for an increased degree of automation.

### The Object of the Invention

The object of the present invention is to achieve a higher degree of automation in terminating, new subscribing, moving and installing of telephone subscriptions within an existing telephone network.

### Brief Description of the Invention

According to the invention, the above stated problem is solved by pre-connecting, to a specific service or connection in a computerised telephone exchange, all the wire pairs in telephone lines to telephone terminal sockets that become available due to a subscription being cancelled or moved. Each pre-connected wire pair is further associated with a specific line identity and connection path in the telephone network. From the telephone terminal socket there is after a subscription has been cancelled thus a pre-set connection to an installation function.

When a new subscription is signed the new subscriber is assigned a telephone number and a code, which are registered in a register. When the new subscriber connects a telephone to a telephone terminal socket that is pre-connected in the above mentioned manner and hooks off the telephone he is connected to the installation function and is by means of a speech message prompted to indicate his telephone number and his code. The telephone subscription is installed in response to input of said telephone number and code and after identification in said register is positive.

When moving within the same dialling code area the subscriber can keep his old telephone number and is assigned a code that is registered together with the telephone number. In the same manner as when signing a new subscription the code is used together with the telephone number to identify the new address and the connection path in the telephone network and the telephone subscription is installed and connected.

According to the invention the subscriber himself thus carries out the installation of his in advance assigned subscription. The inventive concept is based on the thought that all couples of telephone wires by means of computerised telephone exchange technology (AXE) should be pre-connected, such that all cancelled and disconnected subscriptions operate with a tone. The tone is the subscriber's connection signal against the telephone network and the telephone exchange station. The subscriber can thereby call from his telephone line in order to achieve installation of his subscription in for example his house by means of the assigned telephone number and a preferably confidential code.

### Different aspects of the invention comprises the following:

A method for connecting a telephone subscription in a telecommunications network with wiring paths between a telephone station and telephone terminal sockets, wherein said telephone terminal sockets, telephone lines, connection paths or wiring paths are set into a limited access state in relation to the telecommunications network, comprising the features: that said wiring paths are pre-connected to a predetermined connection and are associated with predetermined wiring identities; that a telephone subscription is installed in response to a call from a said telephone terminal socket and input of an in advance assigned telephone number and an in advance assigned code; and that it is detected the associated wiring identity for the wiring path through which said call is made and the telephone subscription is registered with the in advance assigned telephone number of the subscriber as a new wiring identity.

Furthermore, the telephone station detects the associated wiring identity for the wiring path through which said call is made and an ordered installation is registered for said subscription. The invention can further be devised such that an installation can only be carried out from the telephone terminal socket of the subscriber.

An aspect of a method in accordance with the invention in a telecommunications network with wiring paths between a telephone station and a telephone terminal socket, wherein said telephone terminal socket is set into a limited access state in relation to the telecommunications network, comprises the features that said wiring path is pre-connected to a predetermined connection and is associated with a predetermined wiring identity in response to cancellation of a subscription; and that an identifying number that is associated with wiring identity and station number is registered for said wiring path.

An aspect of the invention is constituted in an apparatus for installing telephone subscriptions in a telecommunications network with wiring paths between a telephone station and telephone terminal sockets, wherein said telephone terminal sockets are set into a limited access state in relation to the telecommunications network, comprising means for registering a telephone number and a predetermined code that have been assigned in advance to a telephone subscription; means for receiving a call from said telephone terminal sockets; means for detecting and registering the wiring identity of the wiring path through which said call is made; means for inputting a telephone number and a code; means for identifying a telephone subscription by means of said telephone number and said code; and means for installing said telephone subscription in response to a positively identified code.

Different aspects of the invention are embodied in apparatus or computer program products.

### Advantages of the Invention

Using the invention in connection with cancelling, signing and moving telephone subscriptions a considerably increased degree of automation can be achieved. For signing new subscriptions and moving existing subscriptions it is estimated that a degree of automation of about 80 % or more can be achieved. It is estimated that in favourable conditions the total automation can reach a degree of about 90 % of subscription re-connections. This with the probably conservative assumption that about 10 % of the telephone stock is connected in premises where there has not been any telephone connection before. With the invention there is thus a possibility of saving costs for a part of the connections that previously has required measures taken by an installation engineer.

### Brief Description of the Drawings

The invention is described in more detail below with exemplifying embodiments in conjunction with the accompanying drawings, wherein it is in:

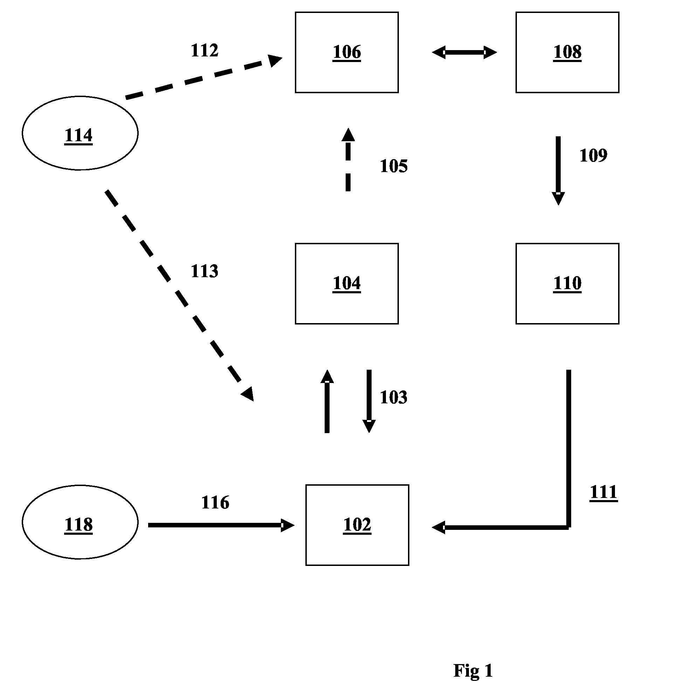

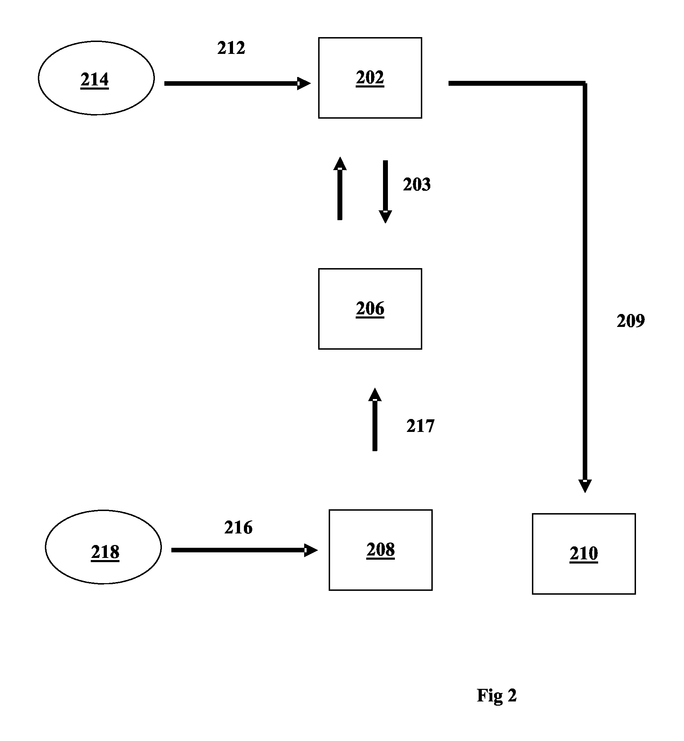

Fig 1 and Fig 2 schematically shown telephone systems with technical functions comprised in embodiments of the invention.

### Detailed Description of Embodiments

In an exemplifying embodiment, as is schematically shown in Fig 1, the invention is implemented in a telephone network having a digital telephone exchange 102, such as an AXE exchange. Such an implementation would comprise the following schematically described technical functions in a telephone system, more specifically: An AXE service for automatic installation, i.e. for automatic installation of subscriptions, implemented in a digital telephone exchange 102 (AXE) with a station number, for example Stn.no: 5281, and a code identifier 106 (KodId, CodeId). The telephone exchange 102 and the code identifier 106 are connected via communication paths 103 (INAP = Intelligent Network Application Part in AXE terminology) and 105 to a technical platform 104 of the type SCP (Service Control Point). Further there is a function for network registration 108 (TAD-X, TAD-Network or corresponding) and a function for ordering a subscription (TAD-P or corresponding).
In this context the abbreviations represent the following:
TAD = T. Administrative Data System for registering and storing subscription and network information, as well controlling some network functions. For example the dates and time for installation (connecting) or un-installation (disconnecting) of a subscription is registered in TAD.
TAD-X = an X-part of a TAD.
TAD-Network or TAD-N = Network register in which all network information is registered and stored.
TAD-P = TAD-Private customer = A support system with a register in which telephone subscriptions are ordered and cancelled. The personal information of the subscribers is stored in this register.

In Fig 1 the network registration function 108 is connected via communication path 109 for a "Connect"-signal to a subscription installation unit (BOLS) 110, which controlled by the network registration function connects an ordered subscription. So, for example, a date for installation of a subscription registered in the network registration function 108 (TAD) operates as a trigger parameter for activating the subscription installation unit 110. The subscription installation unit 110 is in its turn via communication path 111 connected to the telephone exchange 102 in which the actual connection is performed. The system is controlled via an ordering function that is operated via an ordering interface 114, which is connected to the telephone exchange 102 and to the code identifier 106 via communication paths 112,113. A subscriber inputs subscriber data, such as a fictive number, via a subscriber interface in the form of a telephone terminal 118 that is pre-connected ("HotLine") to a predetermined service or connection via the telephone exchange 102 and the communication path 116.

An AXE system is designed with customer categories that are programmed for a service and that are established in AXE blocks. In this connection, a block for the AXE service for automatic subscription installation would be created by means of this customer category, i.e. the customer category: automatic subscription installation. This customer category would possibly be provided with for example the following functions: vacancy connection for un-installed (cancelled) subscriptions; pre-connection (here also called hotline functionality); code identification via technical platform SCP, SMS and code identifier KodEX/KodId; LIC-identification to network registration TAD, identification of network path and identification of address.

The delivery of telephone subscriptions in accordance with the invention comprises activities in connection with cancelling subscriptions and in connection with installtion of a new subscription. Again referring to Fig. 1:
When a subscription is cancelled the telephone system is controlled via the ordering interface 114 to the state that the wiring to the current subscriber interface 118 is pre-connected as a Fixed Destination Call (FDC-1, FDC-2 etc), which in this text also is called "HotLine". The subscriber interface 118 (K0) is registered with a fictive number, together with the LIC identification and station number and the connection path to said subscriber interface 118. The K0 is a status indication in a connection point register of a network registration function TAD, and means that the current wiring path is disconnected and is prepared for connecting under the condition that the connection terminal socket of the previous subscriber is found. LIC means Line Circuit or Line Interface Circuit and is the subscription connection the telephone exchange. In an AXE system each subscriber has an individual line circuit (LIC) connecting him to the line switch module (LSM).

In Fig 2 it is illustrated the communications in the telephone system in connection with the ordering of a subscription. In connection with the ordering of a subscription the customer is assigned a telephone number and a code for identification. The telephone number and the code are registered for identification in the code identifier 206 (KodId) by means of an ordering function and an ordering interface 218. Registration and communication with the code identifier 206 (KodId) is carried out in the telephone system via communication paths 216, 217 and a network registration function 208 (TAD1-X).
A subscriber connects via a subscriber interface 214 and a pre-connected connection 212 to a telephone exchange (AXE) 202 and the above mentioned service for automatic subscription installation, and inputs his assigned telephone number and accompanying code. By means of this pre-connected function (the HotLine-function) an authorisation check is made by means of the code identifier 206. In this check the telephone number and code are matched against the order in the authorisation check, and the subscription is opened via communication over the communication path 203 between the code identifier 206 and the telephone exchange 202. With the fictive number and its LIC the wiring path is automatically registered for an installed customer. A network update is made by means of communication between telephone exchange 202 and the network registration function (TAD1-N) 210 via the communication path 209.

The method according to the invention comprises the following:
The subscriber orders a subscription e.g. in a telephone store or through a telephone call to a sales unit and is assigned a telephone number and a code. The telephone number depends on the station area to which the subscriber will belong. The subscriber connects his physical telephone device in the socket, i.e. the telephone terminal socket, and receives a tone signal. The subscriber calls his assigned telephone number and indicates his assigned telephone number together with the assigned code. By means of the above described functions the telephone subscriptions is installed on the station and the subscriber has thereby himself installed his own subscription. In connection with being connected on the station the subscriptions is registered automatically in the network register together with an assigned wiring identity. The station detects onto what LIC the subscriber is connected and registers this together with the subscription details in the network register.

The network register thus comprises a number register (or a HotLine-number register) in which the information of a cancelled subscriber is registered and stored. This registered information comprises assigned telephone station, LIC number (identification) and equipment address, i.e. the address where the telephone terminal socket to which the subscribers telephone equipment is located. As mentioned above, when the information about cancelled subscriber is registered the connection path is assigned a fictive HotLine-number, i.e. a fixed destination call (FDC) number, that is registered for the wiring path in the network register. This information is then used for identification of the wiring path for the subscription, telephone station, LIC and equipment address of a new connected customer. Fictive, in this context, preferably means that the choice of FDC number is arbitrary with regard to the actual telephone number and is preferably selected in accordance with a predetermined scheme or format. The procedure when moving a subscription to another address is analogous with cancelling a subscription and connecting a new subscription. The part of the invention with the procedure when a subscription is cancelled is important for the delivering, connecting or installing a new subscription in accordance with the invention. The cancelling procedure couples and prepares the connection path for automatic installation of a new subscription through activities of the new subscriber of an ordered subscription. When the new subscriber calls from the identified wiring path and inputs his assigned telephone number, the network register is updated and the fictive number is exchanged for said assigned and input telephone number as a new identity for the wiring path or connection path.

The identity of the wiring path or connection path may as is understood from the description comprise a number of information parameters, such as FDC-number, station number, LIC etc.

The code of the subscription customer can also be used for connecting or disconnecting the available additional service, so called PLUS services, that the customer wants to have connected to his subscription. The customer can for example with the aid of his code connect the service number presentation directly from his telephone. Ordered PLUS services are registered together with the subscription details of the customer in a customer profile register.

The telephone system with connections that are prepared, in accordance with the invention, for delivery of subscriptions is preferably also adapted to allow calls to an emergency service, such as a 112 number site.

Preferably it is arranged such that connection of the telephone subscription and service products only can be performed from the home telephone, i.e. from the telephone terminal socket that belongs to the wiring identity of the telephone subscription. This in order to prevent abuse of the installation technology of the invention.

The inventive method for delivering telephone subscriptions can be implemented using existing switching technology and existing support systems that are adapted with specifically designed computer program product code portions. These computer program code portions are implemented in a data processing system controlling or supporting the telephone communications network. Different parts of the computer program code portions may be implemented in different computer programs and executed on different data processors dependent on the configuration of the telephone network system.

The inventive apparatus is embodied in different hardware units of the telephone communications network and may be either of or a mix of analogous and digital equipment, executing the method or computer program product portions.

## Claims

1. A method for connecting a telephone subscription in a telecommunications network with wiring paths between a telephone station and telephone terminal sockets, wherein said telephone terminal sockets are set into a limited access state in relation to the telecommunications network, **characterised in:**
**that** said wiring paths are pre-connected to a predetermined connection and are associated with predetermined wiring identities;
**that** a telephone subscription is installed in response to a call from a said telephone terminal socket and input of an in advance assigned telephone number and an in advance assigned code; and in
**that** it is detected the associated wiring identity for the wiring path through which said call is made and the telephone subscription is registered with the in advance assigned telephone number of the subscriber as a new wiring identity.

2. The method of claim 1, wherein the telephone station detects the associated wiring identity for the wiring path through which said call is made and an ordered installation is registered for said subscription.

3. The method of any of the preceding claims, wherein an installation can only be carried out from the telephone terminal socket of the subscriber.

4. An apparatus for connecting a telephone subscription in a telecommunications network with wiring paths between a telephone station and telephone terminal sockets, wherein said telephone terminal sockets are set into a limited access state in relation to the telecommunications network, **characterised in**:
means adapted to pre-connect said wiring paths to a predetermined connection and associating said wiring paths with predetermined wiring identities;
means adapted to install a telephone subscription in response to a call from a said telephone terminal socket and an input of an in advance assigned telephone number and an in advance assigned code; and in
means adapted to detect the associated wiring identity for the wiring path through which said call is made and to register the telephone subscription with the in advance assigned telephone number of the subscriber as a new wiring identity.

5. The apparatus of claim 4, wherein the telephone station detects the associated wiring identity for the wiring path through which said call is made and an ordered installation is registered for said subscription.

6. The apparatus of any of the claims 4 or 5, being adapted such that an installation can only be carried out from the telephone terminal socket of the subscriber.

7. A computer program product for controlling a data processing system to connecting a telephone subscription in a telecommunications network with wiring paths between a telephone station and telephone terminal sockets, wherein said telephone terminal sockets are set into a limited access state in relation to the telecommunications network, **characterised in** computer program code portions adapted to control said data processing system to:
pre-connect said wiring paths to a predetermined connection and associating said wiring paths with predetermined wiring identities;
install a telephone subscription in response to a call from a said telephone terminal socket and an input of an in advance assigned telephone number and an in advance assigned code; and in
detect the associated wiring identity for the wiring path through which said call is made and to register the telephone subscription with the in advance assigned telephone number of the subscriber as a new wiring identity.

8. The computer program product of claim 7, further being adapted to control the telephone station to detect the associated wiring identity for the wiring path through which said call is made and an ordered installation is registered for said subscription.

9. The computer program product of any of the claims 7 or 8, further being adapted to control the data processing system such that an installation can only be carried out from the telephone terminal socket of the subscriber.

10. A method in a telecommunications network with wiring paths between a telephone station and telephone terminal sockets, wherein a said telephone terminal socket is set into a limited access state in relation to the telecommunications network,
**characterised in**
means adapted to pre-connect said wiring path to a predetermined connection and to associate said wiring path with a predetermined wiring identity in response to the cancellation of a subscription; and
means adapted to register an identifying number that is associated with wiring identity and station number for said wiring path.

11. An apparatus in a telecommunications network with wiring paths between a telephone station and telephone terminal sockets, wherein a said telephone terminal socket is set into a limited access state in relation to the telecommunications network,
**characterised in**
**that** said wiring path is pre-connected to a predetermined connection and is associated with a predetermined wiring identity in response to the cancellation of a subscription; and
**that** an identifying number that is associated with wiring identity and station number is registered for said wiring path.

12. A computer program product for controlling a data processing system in a telecommunications network with wiring paths between a telephone station and telephone terminal sockets, wherein a said telephone terminal socket is set into a limited access state in relation to the telecommunications network, **characterised in** computer program code portions adapted to control said data processing system:
to pre-connect said wiring path to a predetermined connection and to associate said wiring path with a predetermined wiring identity in response to the cancellation of a subscription; and
adapted to register an identifying number that is associated with wiring identity and station number for said wiring path.

13. An apparatus for installing telephone subscriptions in a telecommunications network with wiring paths between a telephone station and telephone terminal sockets, wherein said telephone terminal sockets are set into a limited access state in relation to the telecommunications network, **characterised in**
means for registering a telephone number and a predetermined code that have been assigned in advance to a telephone subscription;
means for receiving a call from said telephone terminal sockets;
means for detecting and registering the wiring identity of the wiring path through which said call is made;
means for inputting a telephone number and a code;
means for identifying a telephone subscription by means of said telephone number and said code;
and means for installing said telephone subscription in response to a positively identified code.

14. A computer program product for controlling a data processing system to installing telephone subscriptions in a telecommunications network with wiring paths between a telephone station and telephone terminal sockets, wherein said telephone terminal sockets are set into a limited access state in relation to the telecommunications network, **characterised in** computer program code portions adapted to control said data processing system:
to register a telephone number and a predetermined code that have been assigned in advance to a telephone subscription;
to receive a call from said telephone terminal sockets;
to detect and register the wiring identity of the wiring path through which said call is made;
to input a telephone number and a code;
to identify a telephone subscription by means of said telephone number and said code;
and to install said telephone subscription in response to a positively identified code.
